# EUROPEAN PATENT APPLICATION

(11) **EP 2 524 902 A2**
(43) Date of publication of application: **21.11.2012**
(21) Application number: 12001851.0
(22) Date of filing: 19.03.2012
(51) Int. Cl.: C03B 13/04, C03B 25/08, C03B 32/02

(54) **Method for making crystallized glass by rolling and heat treating and apparatus**

(30) Priority: 16.05.2011 JP 2011109744
(71) Applicant: Huzhou Ta Hsiang Glass Products Co., Ltd., Huzhou, Zhejiang (CN); Ta Hsiang Containers Ind.Co., Ltd, Hsin Pu Township, Hsin-chu County 305 (TW)
(72) Inventor: Hsu, Kuo-Chuan, Hsinchu City (TW); Jiang, Yan-Bin, Zhejiang (CN); Qu, Chao, Zhejiang (CN)
(74) Representative: Schöllhorn, Andreas

(57) **Abstract**

A consecutive molding method for crystallized glass comprises: a melting process to obtain molten glass by melting glass raw materials; a molding process to obtain a band-shaped plate glass by roll forming the molten glass to become band-shaped; a crystallization process to obtain a band-shaped crystallized glass plate by conducting thermal treatment on the band-shaped plate glass to crystallize it; and a cutting process to cut the band-shaped crystallized glass plate, wherein the crystallization process includes: a temperature-raising process to produce the band-shaped crystallized glass plate by disposing the band-shaped plate glass obtained in the molding process, in the atmosphere of a crystal nucleus-formation temperature and raising the temperature to a crystal-growth temperature or above to grow crystals as well as form crystal nuclei; and a slow-cooling process to slowly cool down the band-shaped crystallized glass plate.

## Description

### BACKGROUND OF THE INVENTION

### A. Field of the Invention

The present invention relates to a consecutive molding method for crystallized glass and a consecutive molding device thereof.

### B. Description of the Prior Art

In general, crystallized glass is produced by melting glass raw materials that contain crystal nucleus-forming components, and molding the molten glass into a plate to obtain crystalline glass, and then conducting crystallization thermal treatment on it. Methods and devices for producing crystalline glass have been developed to improve production efficiency until now. For instance, a consecutive molding device for crystallized glass that can conduct the following processes consecutively: melting of glass raw materials, molding, crystallization, annealing and cutting, has been disclosed (for example, see reference 1).

In a method for producing crystallized glass that conducts from melting of glass raw materials, molding, crystallization, annealing to cutting, the rate-determinating step is a process of crystallization. The reason is that, in order to prevent from generation of wave, deformation, breakage or crack on the glass plate, during thermal treatment process for crystallization, multi-stages temperature change is required so as not to affect a glass plate by drastic temperature changes.

For instance, in the consecutive molding device disclosed in reference 1, the crystallization device includes: a heat insulating region to retain the temperature of band-shaped plate glass around the glass transition temperature; a first temperature-raising region to raise the temperature of the band-shaped plate glass to crystal nucleus-formation temperature; a nucleus-formation region to retain the band-shaped plate glass at the crystal nucleus-formation temperature; a second temperature-raising region to raise the temperature of the band-shaped plate glass to a crystal-growth temperature; a crystal-growth region to retain the band-shaped plate glass at the crystal-growth temperature; and an annealing region to remove distortion of the band-shaped crystallized glass plate.

Reference 1: Japanese Patent Application No. 2005-41726

### SUMMARY OF THE INVENTION

In a consecutive molding method for crystallized glass, if the thermal treatment process for crystallized glass can be improved, the thermal treatment time for crystallization can be shortened and in result, the production speed can be improved. On the other hand, it is necessary to restrain crystallized glass from generation of wave, deformation, breakage or crack while improving the production speed.

One object of the present invention is to provide a consecutive molding method for crystallized glass that can restrain crystallized glass from generation of wave, deformation, breakage or crack as well as shorten the thermal treatment time for crystallization of the band-shaped plate glass.

Besides, another object of the present invention is to provide a consecutive molding device for crystallized glass that can restrain crystallized glass from generation of wave, deformation, breakage or crack as well as shorten the thermal treatment time for crystallization of the band-shaped plate glass.

Regarding a consecutive molding method for crystallized glass, the inventor has found that it is possible to conduct consecutive molding for crystallized glass by disposing the band-shaped plate glass obtained by roll forming, in a crystal nucleus-formation temperature and raising its temperature to a crystal-growth temperature or above without undergoing the thermal treatment process retained around a glass transition temperature and the thermal treatment process retained at a crystal nucleus-formation temperature.

The detailed processes to solve the problems are described as follows.

(1) A consecutive molding method for crystallized glass that comprises: a melting process to obtain molten glass by melting glass raw materials; a molding process to obtain a band-shaped plate glass by roll forming the molten glass to become band-shaped; a crystallization process to obtain a band-shaped crystallized glass plate by conducting thermal treatment on the band-shaped plate glass to crystallize it; and a cutting process to cut the band-shaped crystallized glass plate,
   wherein the crystallization process includes: a temperature-raising process to produce the band-shaped crystallized glass plate by disposing the band-shaped plate glass obtained in the molding process, in the atmosphere of a crystal nucleus-formation temperature and raising the temperature to a crystal-growth temperature or above, such that crystals are grown and crystal nuclei are formed; and a slow-cooling process to slowly cool down the band-shaped crystallized glass plate.
(2) The consecutive molding method for crystallized glass recited in the above item(1), wherein the crystallization process further includes a heat insulating process to retain the temperature of the band-shaped crystallized glass plate at the crystal-growth temperature or above, between the temperature-raising process and the slow-cooling process.
(3) The consecutive molding method for crystallized glass recited in the above item (1) or (2), further comprises: an adjustment process to adjust the homogeneity, viscosity and liquid surface of the molten glass obtained in the melting process; and a devitrification prevention process to prevent devitrification of the molten glass that has undergone the adjustment process, between the melting process and the molding process.
(4) A consecutive molding device for crystallized glass that comprises: a melting device to obtain molten glass by melting glass raw materials; a molding device to obtain a band-shaped plate glass by roll forming the molten glass to become band-shaped; a crystallization device to obtain a band-shaped crystallized glass plate by conducting thermal treatment on the band-shaped plate glass to crystallize it; and a cutting device to cut the band-shaped crystallized glass plate,
   wherein the crystallization device includes: a temperature-raising region to produce the band-shaped crystallized glass plate by accommodating the band-shaped plate glass obtained by the molding
   device in the atmosphere of a crystal nucleus-formation temperature and raising the temperature to a crystal-growth temperature or above in order to grow crystals as well as form crystal nuclei; and a slow-cooling region to slowly cool down the band-shaped crystallized glass plate.
(5) The consecutive molding device for crystallized glass recited in the above item (4), wherein the crystallization device further includes a heat insulating region to retain the temperature of the band-shaped crystallized glass plate at the crystal-growth temperature or above between the temperature-raising region and the slow-cooling region.
(6) The consecutive molding device for crystallized glass recited in the above item (4) or (5), further comprises: an adjustment device to adjust the homogeneity, viscosity and liquid surface of the molten glass obtained by the melting device; and a devitrification prevention device to prevent devitrification of the molten glass flowing out from the adjustment device, between the melting device and the molding device.

In accordance with the present invention, a consecutive molding method for crystallized glass which can restrain crystallized glass from generation of wave, deformation, breakage or crack as well as shorten the thermal treatment time for crystallization of band-shaped plate glass, can be provided.

Furthermore, a consecutive molding device for crystallized glass which can restrain crystallized glass from generation of wave, deformation, breakage or crack as well as shorten the thermal treatment region for crystallization of band-shaped plate glass, can also be provided.

### BRIEF DESCRIPTION OF THE DRAWINGS

FIG 1 is a schematic showing an embodiment of the consecutive molding device for crystallized glass in accordance with the present invention.

FIG 2A and FIG. 2B respectively show the graphs of the gradients of air temperature in the crystallization device of the embodiment of the consecutive molding device for crystallized glass in accordance with the present invention.

FIG. 3 is a schematic showing another embodiment of the consecutive molding device for crystallized glass in accordance with the present invention.

FIG. 4A and FIG. 4B respectively show the graphs of the gradients of air temperature in the crystallization device of another embodiment of the consecutive molding device for crystallized glass in accordance with the present invention.

### DETAILED DESCRIPTION OF THE PREFERRED EMBODIMENTS

### consecutive molding method for crystallized glass

The first aspect of the invention is a consecutive molding method for crystallized glass that comprises:
a melting process to obtain molten glass by melting glass raw materials;
a molding process to obtain a band-shaped plate glass by roll forming the molten glass to become band-shaped;
a crystallization process to obtain a band-shaped crystallized glass plate by conducting thermal treatment on the band-shaped plate glass to crystallize it; and
a cutting process to cut the band-shaped crystallized glass plate,
wherein the crystallization process includes:
a temperatare-raising process to produce the band-shaped crystallized glass plate by disposing the band-shaped plate glass obtained in the molding process, in the atmosphere of a crystal nucleus-formation temperature and raising the temperature to a crystal-growth temperature or above to grow crystals as well as form crystal nuclei; and
a slow-cooling process to slowly cool down the band-shaped crystallized glass plate.

The consecutive molding method for crystallized glass in accordance with the present invention, provided with the following processes in the order of: a melting process, a molding process, a crystallization process and a cutting process, can conduct from the melting of glass raw materials, molding, crystallization, annealing to cutting consecutively.

The melting process is a process to obtain molten glass by heating glass raw materials to melt the same. The heating temperature is not particularly limited as long as it is the temperature under which glass raw materials can be melted. The melting process may include preparation of glass raw materials before melting glass raw materials. F rom the viewpoint of production efficiency, it is preferable to conduct from preparation of glass raw materials to melting the same consecutively.

The molding process is a process to obtain a band-shaped plate glass by roll forming the molten glass to become band-shaped. The roll forming method may be a conventionally used method. For example, the roll-out method which conducts roll forming on molten glass by a pair of rollers, can be applied.

The crystallization process is a process to obtain a band-shaped crystallized glass plate by conducting thermal treatment on the band-shaped plate glass to crystallize it. The crystallization process will be described in more detail later.

The cutting process is a process to cut the band-shaped crystallized glass plate in a prescribed length. The cutting method may be a conventionally used method. For example, cutting methods with a cutter made of diamond or water jet are applicable.

The crystallization process includes: a temperature-raising process to produce the band-shaped crystallized glass plate by disposing the band-shaped plate glass obtained in the molding process, in the atmosphere of a crystal nucleus-formation temperature and raising the temperature to a crystal-growth temperature or above to grow crystals as well as form crystal nuclei; and a slow-cooling process to slowly cool down the band-shaped crystallized glass plate.

In the temperature-raising process, in order to raise the temperature of the band-shaped plate glass, it is proper to raise the air temperature around the band-shaped plate glass from the crystal nucleus-formation temperature to the crystal-growth temperature or above. In the slow-cooling process, in order to slowly cool down the band-shaped crystallized glass plate, it is proper to gradually cool down the air temperature around the band-shaped crystallized glass plate.

In the crystallization process, the thermal treatment for crystallizing the band-shaped plate glass starts from disposing the band-shaped plate glass in the atmosphere of the crystal nucleus-formation temperature. In other words, the present invention does not include a thermal treatment process to retain around a glass transition temperature, which is included in conventional consecutive molding methods. In ad dition, "around a glass transition temperature" signifies the range of±10°C of a glass transition temperature.

The temperature-raising process is a process to dispose the band-shaped plate glass obtained in the molding process in the atmosphere of a crystal nucleus-formation temperature and raise the temperature of the band-shaped plate glass to a crystal-growth temperature or above. The process is a process to grow crystals as well as form crystal nuclei by raising the temperature of the band-shaped plate glass. The temperature of the band-shaped plate glass disposed in the atmosphere of the crystal nucleus-formation temperature is raised to the crystal-growth temperature or above consecutively, and formation of crystal nuclei and growth of crystals proceed.

In the temperature-raising process, it is possible that as the temperature rises, formation of crystal nuclei occurs first and then, growth of crystals occurs in the band-shaped plate glass. On the other hand, it is also possible that formation of crystal nuclei and growth of crystals occur at the same time in the band-shaped plate glass. Furthermore, formation of crystal nuclei and growth of crystals can occur in turn or at the same time in the band-shaped plate glass.

The crystal nucleus-formation temperature can be any temperature as long as it is possible to form crystal nuclei. Appropriate temperature for it can be selected according to glass composition.

It is recommended to set the crystal nucleus-formation temperature at or around a crystal nucleus-formation temperature in conventional manufacturing methods for crystallized glass. The crystal nucleus-formation temperature is usually 600°C∼1000°C, preferably 6S0°C∼900°C, even preferably 700°C∼850°C . It is recommended to keep the temperature almost constant.

The crystal-growth temperature is not particularly limited and depends on the glass composition of a band-shaped plate glass. It is recommended to set the crystal-growth temperature at or around a crystal-growth temperature in conventional manufacturing methods for crystallized glass. The crystal-growth temperature is normally 50°C∼ 400°C higher than a crystal nucleus-formation temperature. Spec ifically, the crystal-growth temperature is preferably 750°C∼1100°C, even preferably 800°C∼1000°C. The crystal-growth temperature is preferably 850°C∼1000°C in order to precipitate a β-quartz mixed crystal or β-spodumene in band-shaped plate glass.

In the temperature-raising process, the temperature to be reached can be any temperature as long as it is the crystal-growth temperature or above, and the maximum is not particularly limited. From the viewpoint of production efficiency, the temperature to be reached is preferably the crystal-growth temperature. From the viewpoint of promoting growth of crystals, the temperature to be reached is preferably above the crystal-growth temperature and usually above 880°C though it depends on glass composition. Preferably, the temperature to be reached is 10°C ∼30ºC higher than the crystal-growth temperature.

In the temperature-raising process, the temperature gradient of raising temperature is not particularly limited. Temperature gradient can be selected according to the glass composition or thickness of a band-shaped plate glass, as long as formation of crystal nuclei and growth of crystals can proceed sufficiently.

A temperature-raising rate can be set, for example, 1°C/minute∼ 20°C/minute. It is preferable to raise temperature at a rate of 1°C/minute ∼10°C/minute in order to precipitate a β-quartz mixed crystal or β-spodumene in the band-shaped plate glass. As the temperature-raising rate becomes slow, wave, deformation, breakage or crack is hardly to occur in the band-shaped plate glass. However, from the viewpoint of production speed, the rate is preferable to be fast.

The time required for the temperature-raising process is preferably 0.5 hour or longer from the viewpoint of enhancing the degree of crystallization by proceeding formation of crystal nuclei and growth of crystals sufficiently. On the other hand, the time is preferably 1 hour or shorter from the viewpoint of enhancing production efficiency.

In the temperature-raising process, formation of crystal nuclei can be easily carried out by adding nucleus-forming components, such as TiO₂ ZrO₂ P₂Oₛ and F₂ into glass raw materials in advance.

The slow-cooling process is a process to slowly cool down a band-shaped crystallized glass plate for removing residual strain from the band-shaped crystallized glass plate as well as making the glass homogeneous. In the present invention, "slow-cooling" signifies the cooling at a rate of reducing temperature that is sufficiently slow to remove distortion. In the slow-cooling process, the temperature gradient of cooling is not particularly limited, and can be selected according to the glass composition or thickness of a band-shaped plate glass. For example, it is recommended to cool down at a rate of reducing temperature of 1°C/minute∼40°C/minute. Naturally, as the rate becomes slow, the residual strain becomes little.

Preferably, the crystallization process further includes a heat insulating process to retain the temperature of the band-shaped crystallized glass plate at a crystal-growth temperature or above for a certain fixed time between the temperature-raising process and the slow-cooling process. By including the heat insulating process, it is possible to enhance formation of crystal nuclei and growth of crystals more (especially, growth of crystals), and produce a crystallized glass with high degree of crystallization.

The retention temperature in the heat insulating process can be any temperature as long as it is crystal-growth temperature or above. If the reached temperature in the temperature-raising process is the crystal-growth temperature, the retention temperature in the heat insulating process can be the reached temperature in the temperature-raising process. If the reached temperature in the temperature-raising process is over the crystal-growth temperature, the retention temperature in the heat insulating process may be over the crystal-growth temperature, and below the reached temperature in the temperature-raising process.

It is recommended to keep the retention temperature in the heat insulating process almost constant (within ±5°C). The retention time in the heat insulating process is not particularly limited and a condition that allows crystals to grow sufficiently can be selected properly. The retention time in the process is preferably 10 minutes∼3 hours.

In the present invention, the band-shaped plate glass obtained by roll forming is directly disposed in crystal nucleus-formation temperature without undergoing a thermal treatment process to retain the band-shaped plate glass around a glass transition temperature, which is considered as necessary in the conventional consecutive molding method for crystallized glass, and the temperature thereof is raised to a crystal-growth temperature or above without undergoing a thermal treatment process to retain the band-shaped plate glass at the crystal nucleus-formation temperature. Theref ore, it is possible to shorten the whole treatment time in the crystallization process and also possible to lengthen the time taken for the temperature-raising process and the slow-cooling process without extending the whole treatment time in the crystallization process. When the time taken for the temperature-raising process becomes longer, the temperature gradient of raising temperature may become gentle. As a result, advantageously, the resulting band-shaped plate glass rarely generates wave, deformation, breakage or crack. In addition, if the time taken for the slow-cooling process become longer, the temperature gradient of slow-cooling may become gentle or may include multiple stages. Consequently, distortion in the band-shaped crystallized glass plate where crystals have formed, can be removed well and therefore it is favorable. Accordingly, the present invention is favorable because the crystallized glass obtained has excellent flatness, impact strength, and so on.

The present invention can restrain the generation of wave, deformation, breakage or crack in the band-shaped crystallized glass plate by conducting thermal treatment for crystallization in the temperature-raising process. Although the mechanism is not restricted to specific theory, it is deduced as follows.

Crystalline glass normally expands when its temperature is raised and contracts when it forms crystal nuclei and grows crystals. Therefore, when the thermal treatment process for crystallization includes thermal treatment for raising temperature, thermal treatment for forming crystal nuclei, next thermal treatment for raising temperature and thermal treatment for growing crystals, in turn, expansion parts and contraction parts are going to coexist adjacently, one after the other in a sheet of consecutive band-shaped plate glass in the thermal treatment process for crystallization. In a sheet of consecutive band-shaped plate glass, it is considered that coexisting of expansion parts with contraction parts adjacently one after the other causes the generation of wave, deformation, breakage or crack in the band-shaped crystallized glass plate if the thermal treatment time for crystallization is not secured sufficiently.

In the present invention, since the thermal treatment process for crystallization is the temperature-raising process, the temperature change of the thermal treatment process for crystallization is consecutive and in the band-shaped plate glass, formation of crystal nuclei and growth of crystals are proceeding consecutively or simultaneously. Therefore, it is deduced that expansion parts and contraction parts do not coexist adjacently one after the other in a sheet of consecutive band-shaped plate glass. As a res ult, the generation of wave, deformation, breakage or crack in the band-shaped crystallized glass plate can be restrained.

Preferably, the consecutive molding method for crystallized glass in accordance with the present invention further includes: an adjustment process between the melting process and the molding process to adjust the homogeneity, viscosity and liquid surface of the molten glass obtained in the melting process; and a devitrification prevention process to prevent the devitrification of the molten glass which has undergone the adjustment process.

By including the adjustment process and the devitrification prevention process, the present invention can make the molten glass homogeneous and control the viscosity of it and prevent it from devitrification and furthermore supply it into the molding process at a constant velocity.

The adjustment process is composed of making the molten glass homogeneous by stirring, controlling the viscosity of it by heating, and controlling the liquid surface of it. To control the liquid surface of the molten glass will be carried out by detecting the height of liquid surface of the molten glass introduced from the melting process into the adjustment process, and feeding back the signal corresponding to the amount of change of the liquid surface height to the glass raw material injection device, and adjusting the amount of raw materials disposed into the melting device.

Preferably, the devitrification prevention process is composed of the heat insulation of the molten glass and the application of heat on it. The heat insulation and the application of heat allow the molten glass to retain at the prescribed temperature before introduced into the molding process and prevent the devitrification of the molten glass.

For the crystallized glass obtained by undergoing the processes explained above, a grinding step to grind the surface for adjusting the thickness or finishing the surface and the like, and a processing step to form a prescribed size or shape can also be carried out depending on our necessity.

For the consecutive molding method for crystallized glass in accordance with the present invention, a consecutive molding device for crystallized glass in accordance with the present invention, described as follows, is favorable.

### <consecutive molding device for crystallized glass>

The second aspect of the present invention is a consecutive molding device for crystallized glass that comprises:
a melting device to obtain molten glass by melting glass raw materials;
a molding device to obtain a band-shaped plate glass by roll forming the molten glass to become band-shaped;
a crystallization device to obtain a band-shaped crystallized glass plate by conducting thermal treatment on the band-shaped plate glass to crystallize it; and
a cutting device to cut the band-shaped crystallized glass plate,
wherein the crystallization device includes:
a temperature-raising region to produce the band-shaped crystallized glass plate by accommodating the band-shaped plate glass obtained by the molding device in the atmosphere of a crystal nucleus-formation temperature and raising the temperature to a crystal-growth temperature or above in order to grow crystals as well as form crystal nuclei, and
a slow-cooling region to slowly cool down the band-shaped crystallized glass plate.

The consecutive molding device for crystallized glass in accordance with the present invention, provided with the following devices in this order: the melting device, the molding device, the crystallization device and the cutting device, can conduct the following steps consecutively: the melting of glass raw materials, molding, crystallization, annealing and cutting.

The melting device is a device to obtain molten glass by heating glass raw materials to melt the same. The melting device can be a furnace having a heating means for melting glass raw materials. An y conventionally known glass melting furnace is applicable. The melting device may include a preparation means to prepare glass raw materials as a previous step of the heating means for melting glass raw materials.

The molding device is a device to roll form the molten glass to become band-shaped, such that a band-shaped plate glass can be obtained. In the molding device, the roll forming process is not particularly limited. For example, a pair of rollers can be utilized for conducting roll-out method to perform roll forming process.

The crystallization device is a device to conduct thermal treatment on the band-shaped plate glass and to crystallize it such that a band-shaped crystallized glass plate can be obtained. The cryst allization device will be described in more detail later.

The cutting device is a device to cut the band-shaped crystallized glass plate in a prescribed length. In the cutting device, any conventionally used cutting process can be used. For example, a cutter made of diamond or water jet can be utilized to conduct the cutting process.

The crystallization device includes: a temperature-raising region to produce the band-shaped crystallized plate glass by accommodating the band-shaped plate glass obtained by the molding device, in the atmosphere of a crystal nucleus-formation temperature, raising the temperature to a crystal-growth temperature or above and making crystal nuclei form as well as making crystals grow; and a slow-cooling region to slowly cool down the band-shaped crystallized glass plate.

The crystallization device has the temperature-raising region at the top in the conveyance direction of the band-shaped plate glass and does not have the thermal treatment region to retain around a glass transition temperature and the thermal treatment region to retain at the crystal nuclei-formation temperature, which the conventional consecutive molding device has.

The temperature-raising region is a region to accommodate the band-shaped plate glass obtained by the molding device in the atmosphere of a crystal nucleus-formation temperature and raise the temperature of the band-shaped plate glass to a crystal-growth temperature or above. The temperature-raising region is the region to grow crystals as well as form crystal nuclei by raising the temperature of the band-shaped plate glass. The temperature of the band-shaped plate glass accommodated in the temperature-raising region is consecutively raised to the crystal-growth temperature or above while passing the temperature-raising region and formation of crystal nuclei and growth of crystals will proceed.

The crystal nucleus-formation temperature can be any temperature as long as it is possible to form crystal nuclei. Preferably, the temperature is set at or around the crystal nucleus-formation temperature in the conventional manufacturing methods for crystallized glass. The crystal nucleus-formation temperature is usually 600°C∼1000°C, preferably 650°C∼900°C and even preferably 700°C∼850°C.

The crystal-growth temperature is not particularly limited and depends on glass composition of the band-shaped plate glass. Preferably, the crystal-growth temperature is set at or around the crystal-growth temperature in the conventional manufacturing method for crystallized glass. The crystal-growth temperature is normally 50°C∼400°C higher than the crystal nucleus-formation temperature. Specifically, the crystal-growth temperature is preferably 750°C∼1100°C, even preferably 800ºC∼1000°C .

In the temperature-raising region, the temperature at the lowest part (the outlet) in the conveyance direction of the band-shaped plate glass, can be any temperature as long as it is the crystal-growth temperature or above, and no upper limit is imposed. From the viewpoint of production efficiency, the temperature at the lowest part is preferably the crystal-growth temperature. From the viewpoint of promoting crystal growth, the temperature at the lowest part is preferably over the crystal-growth temperature, usually above 880°C although it depends on the glass composition. Preferably, the temperature at the lowest part is about 10°C∼30ºC higher than the crystal-growth temperature.

Inside the temperature-raising region, a temperature gradient is preferably set such that the temperature of the band-shaped plate glass can be gradually raised as the plate glass is carried towards the outlet of the crystallization device. In the temperature-raising region, the temperature gradient inside the region is not particularly limited. Temperature gradient can be selected according to glass composition or thickness of band-shaped plate glass, as long as formation of crystal nuclei and growth of crystals can proceed sufficiently. As the temperature gradient becomes gentle, the band-shaped plate glass rarely generates wave, deformation, breakage or crack. However, a sharp gradient is preferable from the viewpoint of production speed.

The length of the temperature-raising region and the conveyance rate of the band-shaped plate glass inside the region are not particularly limited, and a condition which allows crystal nuclei to form and crystals to grow sufficiently can be chosen properly.

The conveyance rate of the band-shaped plate glass inside the temperature-raising region can be chosen properly according to the handling amount of the melting device and/or the molding device. When the conveyance rate of the band-shaped plate glass in the temperature-raising region is slow, the length of the region can be shortened accordingly. On the other hand, when the conveyance rate is fast, the length of the region can be lengthened, accordingly.

The slow-cooling region is a region to slowly cool down the band-shaped crystallized glass plate for making the glass homogeneous as well as removing residual strain from the band-shaped crystallized glass plate. In the slow-cooling region, the temperature gradient inside the region is not particularly limited and can be chosen according to glass composition or thickness of the band-shaped plate glass. Naturally, as the temperature gradient becomes gentle, the residual strain becomes little.

Furthermore, it is preferable that the crystallization device includes a heat insulating region to retain the temperature of the band-shaped crystallized glass plate at the crystal-growth temperature or above for a certain fixed time. By including the heat insulating region, it is possible to promote formation of crystal nuclei and growth of crystals (especially, growth of crystals) and produce crystallized glass with high degree of crystallization.

The air temperature in the heat insulating region can be any temperature as long as it is the crystal-growth temperature or above. When the temperature at the lowest part (the outlet) in the temperature-raising region is the crystal-growth temperature, the air temperature in the heat insulating region can be the temperature at the lowest part in the temperature-raising region. When the temperature at the lowest part in the temperature-raising region is above the crystal-growth temperature, the air temperature in the heat insulating region can be above the crystal-growth temperature and below the temperature at the lowest part in the temperature-raising region. Preferably, the air temperature in the heat insulating region is kept almost constant (within ±5°C).

The length of the heat insulating region and the conveyance rate of the band-shaped plate glass inside the region are not particularly limited, and a condition that allows crystals to grow sufficiently can be chosen properly.

The conveyance rate of the band-shaped plate glass inside the heat insulating region can be chosen properly according to the handling amount of the melting device and/or the molding device. W hen the conveyance rate of the band-shaped plate glass in the heat insulating region is slow, the length of the region can be shortened accordingly.
On the other hand, when the conveyance rate is fast, the length of the region can be lengthened, accordingly.

The present invention does not include a thermal treatment region to retain the band-shaped plate glass around a glass transition temperature or at crystal nucleus-formation temperature which is regarded as necessary for a conventional consecutive molding device for crystallized glass. The band-shaped plate glass drawn out of the molding device is directly disposed in crystal nucleus-formation temperature and raise its temperature to a crystal-growth temperature or above. Therefore, it is possible to shorten the whole length of the crystallization device and also possible to lengthen the temperature-raising region and the slow-cooling region without extending the whole length of the crystallization device. When the temperature-raising region becomes longer, the temperature gradient of raising temperature may become gentle. Therefore, it is favorable that wave, deformation, breakage or crack is hardly generated in the band-shaped plate glass. When the slow-cooling region becomes longer, the temperature gradient of slow-cooling may become gentle or may include multiple stages. Therefore, it is favorable that distortion can be removed well from the band-shaped crystallized glass plate where crystals have been formed. As a result, the present invention is favorable because it provides excellent impact strength in the obtained crystallized glass.

The present invention can restrain the generation of wave, deformation, breakage or crack in the band-shaped crystallized glass plate by conducting thermal treatment for crystallization in the temperature-raising region. Although the mechanism is not restricted to specific theory, it is deduced as follows.

When the thermal treatment region for crystallization includes a thermal treatment region for temperature-raising, a thermal treatment region for crystal nucleus-formation, a next thermal treatment region for temperature-raising and a thermal treatment region for crystal growth in turn, expansion parts and contraction parts will coexist adjacently, one after the other in a sheet of consecutive band-shaped plate glass which is inside the thermal treatment region for crystallization. It is considered that the coexistence of expansion parts and contraction parts adjacently one after the other in a sheet of consecutive band-shaped plate glass causes the generation of wave, deformation, breakage or crack in the bans-shape crystallized glass plate if there is no sufficient thermal treatment time for crystallization.

In the present invention, since the thermal treatment region for crystallization is the temperature-raising region, the temperature distribution inside the thermal treatment region for crystallization is consecutive and in the band-shaped plate glass, formation of crystal nuclei and growth of crystals proceed consecutively or simultaneously. Therefore, it is deduced that expansion parts and contraction parts do not coexist adjacently one after the other in a sheet of consecutive band-shaped plate glass and the generation of wave, deformation, breakage or crack in the band-shaped crystallized glass plate can be restrained.

Preferably, the consecutive molding device in accordance with the present invention further includes: an adjustment device between the melting device and the molding device to adjust the homogeneity, viscosity and liquid surface of the molten glass obtained by the melting device; and a devitrification prevention device to prevent the devitrification of the molten glass flowing out from the adjustment device.

The present invention, provided with the adjustment device and the devitrification prevention device, can make the molten glass homogeneous, control the viscosity and prevent the devitrification of the molten glass, and supply the molten glass to the molding device at a prescribed flowing speed.

The adjustment device is composed of a homogenizing unit to make molten glass homogeneous, a viscosity control unit to control the viscosity of molten glass and a liquid surface control unit to control the liquid surface of molten glass. The homogenizing unit includes a device to stir molten glass. The vi scosity control unit includes a heating device to heat molten glass. The li quid surface control unit adjusts the amount of raw materials injected into the melting device by detecting the height of liquid surface of the molten glass introduced from the melting device into the adjustment device, and feeding back the signal corresponding to the amount of change of the liquid surface height, to the glass raw material injection device. By the li quid surface control unit, it is possible to measure the height of the liquid surface of the molten glass that passes the adjustment device and adjust the amount of raw materials injected. Theref ore, it is possible to control that the band-shaped plate glass obtained from the molding device has a prescribed thickness. Consequently, it is easy to accomplish the stabilization of quality and conduct process management, as well as to achieve the manufacture automation and mass-production of crystallized glass.

Preferably, the devitrification prevention device is composed of a heat insulating device to keep molten glass warm, and a heating device to heat molten glass. The he at insulation by means of the heat insulating device and the heating by means of the heating device allow the molten glass to retain at a prescribed temperature before being introduced into the molding device and prevent the devitrification of the molten glass.

Furthermore, the consecutive molding device for crystallized glass in accordance with the present invention preferably includes a press roller between the molding device and the crystallization device to press the band-shaped plate glass which is taken out of the molding device. The surface of the band-shaped plate glass taken out of the molding device is formed into a flat rolled surface by the press roll. By including the press roll, the band-shaped plate glass obtained from the molding device can be flattened and then introduced into the crystallization device.

The consecutive molding device for crystallized glass in accordance with the present invention is favorable as a manufacturing device for crystallized glass, which is obtained by consecutively molding process from glass raw materials. The crystallized glass is used generally as substrates for high-tech products like color filter or image sensor, setters for baking electronic parts, surface materials for electromagnetic cookers, optical components, shelves for microwave ovens, windowpane for fire doors, front windows of oil heaters or wood stoves, building materials and so on.

The embodiment of the consecutive molding device for crystallized glass in accordance with the present invention is described below referring to the accompanying drawings. However, the present invention is not limited to the specific embodiment.

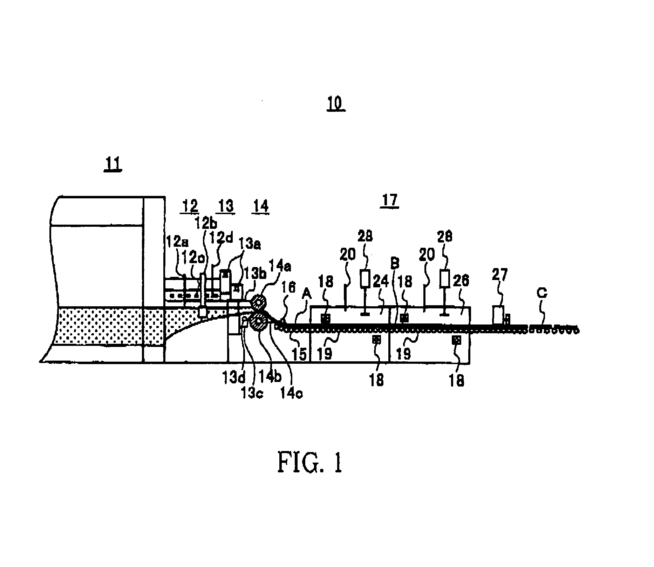

FIG. 1 shows a schematic of an example of the consecutive molding device for crystallized glass in accordance with the present invention.

The consecutive molding device for crystallized glass 10 (hereafter, mentioned as "consecutive molding device 10") includes a melting device 11, an adjustment device 12, a devitrification prevention device 13, a roll-out molding device 14, a crystallization device 17 (roller hearth kiln 17) and a cutting device 27.

The melting device 11 is a device for melting glass raw materials to produce molten glass. It ca n be an intermittent furnace having the functions of melting, clarifying and homogenizing glass raw materials, or a combinational furnace composed of several units connected together each achieving one of the aforementioned functions.

Molten glass obtained from the melting device 11 is carried to the adjustment device 12 disposed downstream in the conveyance direction. The adjustment device 12 is a device to adjust the homogeneity, viscosity, and liquid surface height of the molten glass. A liquid surface control unit 12a, a stirrer 12b (a stirring bar 12b), a heating element 12c and a thermocouple 12d are installed in the adjustment device 12.

The liquid surface control unit 12a detects the height of a liquid surface of the molten glass, and feeds back signals corresponding to the amount of change of the height of the liquid surface to the glass raw material injection device (not shown in the figure) which injects glass raw materials to the melting device 11, and adjusts the amount of glass raw materials injected. In t his way, the height of the liquid surface in the adjustment device 12 can be adjusted to a prescribed value.

The stirrer 12b makes the molten glass homogeneous by stirring it.

The heating element 12c heats the molten glass. The heating element 12c and the thermocouple 12d adjust the viscosity of the molten glass to a prescribed value by adjusting the temperature of the molten glass.

The molten glass flowing out of the adjustment device 12 flows into the devitrification prevention device 13 disposed downstream in the conveyance direction. A heat insulating device 13a (a heat insulating fire-proof material 13a), a lip 13b and a supporter 13c are installed in the devitrification prevention device 13. The heat insulating device 13a retains the molten glass at a prescribed temperature by heat insulation. The lip 13b leads the molten glass to the roll-out molding device 14. The supporter 13c is for supporting the lip 13b. Fur thermore, a heating unit 13d can be optionally installed in the devitrification prevention device 13. The hea ting unit 13d is a heating device provided by penetrating the supporter 13c. The lip 13b and the supporter 13c can be heated by the heating unit 13d.

The devitrification prevention device 13 prevents the devitrification of the molten glass by retaining the molten glass at a prescribed temperature before being introduced into the roll-out molding device 14 by heat insulation of the heat insulating device 13a. In the case that the heating unit 13d is installed in the devitrification prevention device 13, the heating by the heating unit 13d also contributes to prevent the devitrification of the molten glass.

The molten glass which has flowed out of the adjustment device 12 and passed the devitrification prevention device 13, is supplied to the roll-out molding device 14 disposed downstream in the conveyance direction. The r oll-out molding device 14 molds the molten glass into a band-shaped plate glass by roll forming. An upper roller 14a, a lower roller 14b and a cooling water box 14c are installed in the roll-out molding device 14. A commercially available roller can be used as the upper roller 14a and the lower roller 14b, which are made from materials with excellent heat resistance, heat shock resistance, high temperature strength and heat cracking resistance.

The upper roller 14a and the lower roller 14b are disposed opposite to each other, and the molten glass supplied between the pair of rollers is molded into band-shaped by roll forming. The cooling water box 14c is continuously supplied with water for cooling the molten glass. The molded band-shaped glass is cooled such that its band-shape can be maintained.

The glass molded to become band-shaped by the roll-out molding device 14 is loaded on a conveyor 15 disposed downstream in the conveyance direction. The con veyor 15 is composed of a plurality of rollers in alignment and conveys the band-shaped plate glass which is molded by rolling. Bes ides the rollers, the conveyor 15 can be composed of another means which can convey the band-shaped plate glass, such as a heat resisting belt.

A press roller 16 which presses the band-shaped plate glass roll formed by the roll-out molding device 14, is installed upstream in the conveyance direction, over the conveyor 15. The press roller 16 is composed of a single roller or a plurality of rollers made of excellent heat resisting steel. The glass roll formed to be band-shaped by the roll-out molding device 14 is pressed by the press roller 16 to become flat band-shaped plate glass A. Bes ides, depending on the condition of the surface of the band-shaped plate glass roll formed by the roll-out molding device 14, the press roller 16 can be omitted in some occasion.

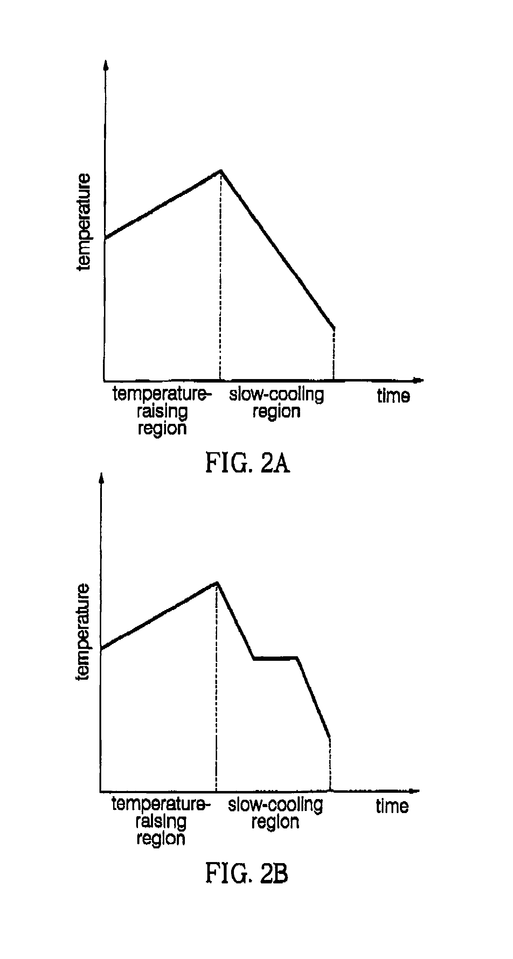

The band-shaped plate glass A is carried and introduced into the crystallization device 17 by the conveyor 15. In turn from the upper stream in the conveyance direction, the crystallization device 17 is composed of: a temperature-raising region 24 to accommodate the band-shaped plate glass A and raise its temperature to the crystal-growth temperature or above in order to form a band-shaped crystallized glass plate B by forming crystal nuclei as well as growing crystals; and a slow-cooling region 26 to slowly cool down the band-shaped crystallized glass plate B. The air temperature of each of the temperature-raising region 24 and slow-cooling region 26 is controlled to have the temperature gradient as shown in, for example, FIG. 2A or FIG 2B. The temperature gradient shown in FIG. 2A is set such that the temperature gradient of slow-cooling is gentle. The temperature gradient shown in FIG. 2B is set such that the temperature gradient of slow-cooling includes the following stages: rapid cooling, heat insulation, and rapid cooling.

The crystallization device 17 is the roller hearth kiln that is commercially available, wherein a heating unit 18, a conveyance roller 19, a thermocouple 20, and a stirrer 28 are installed.

In the temperature-raising region 24 and the slow-cooling region 26, one or a plurality of heating units 18 are placed on the sidewalls of the furnaces above and below the conveyance roller 19. Each heating unit 18 is provided with a thermocouple 20 so as to control the temperature with the accuracy within ±5ºC. The st irrer 28 stirs the air inside each region to makes the temperature thereof homogeneous. Consequently, the crystallization thermal treatment can be surely conducted and the crystallization of roll formed band-shaped plate glass can be conducted easily and surely. Furthermore, a heating source, such as SiC heating element, kanthal heater, gas and electricity, may be chosen properly according to the desired temperature.

The conveyance roller 19 is composed of a heat resisting roller and conveys the band-shaped plate glass continuously into the crystallization device 17 without stagnation.

The temperature-raising region 24 is a region to accommodate the band-shaped plate glass A in the atmosphere of a crystal nucleus-formation temperature and raise the temperature to a crystal-growth temperature or above. In the region 24, for example, the temperature gradients as shown in FIG. 2A and FIG 2B, are set and the temperature of the band-shaped plate glass A is supposed to be raised gradually as the plate glass A is carried towards the exit direction of the crystallization device 17. The band-shaped plate glass A, passing the temperature-raising region 24 to form crystal nuclei and grow crystals, becomes a band-shaped crystallized glass plate B.

The slow-cooling region 26 is a region to slowly cool down the band-shaped crystallized glass plate B in order to make the glass homogeneous as well as remove residual strain from the glass plate B.
In the slow-cooling region 26, for example, the temperature gradients as shown in FIG. 2A and FIG 2B are set and the band-shaped crystallized glass plate B is supposed to be cooled gradually as it is carried toward the exit direction of the crystallization device 17.

The band-shaped crystallized glass plate B obtained by crystallizing the band-shaped plate glass A by means of the crystallization device 17 is conveyed to the cutting device 27 disposed downstream in the conveyance direction. The cu tting device 27 cuts the band-shaped crystallized glass plate B in a prescribed size. A crystallized glass plate C obtained by cutting by means of the cutting device 27 is transported to a secondary processing factory to produce finished products by secondary processing.

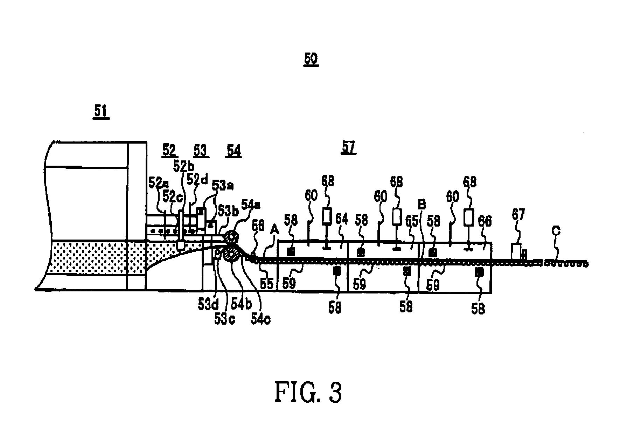

FIG. 3 shows a schematic of another example of the consecutive molding device for crystallized glass in accordance with the present invention. A consecutive molding device 50 for crystallized glass (hereafter, mentioned as "consecutive molding device 50") includes a melting device 51, an adjustment device 52, a devitrification prevention device 53, a roll-out molding device 54, a crystallization device 57 (roller hearth kiln 57, NGK INSULATORS LTD.) and a cutting device 67.

The melting device 51, the adjustment device 52, the devitrification prevention device 53, the roll-out molding device 54 and the cutting device 67 respectively correspond to the melting device 11, the adjustment device 12, the devitrification prevention device 13, the roll-out molding device 14 and the cutting device 27 in the consecutive molding device 10, and each composition is the same as the one described for the consecutive molding device 10.

A liquid-surface control unit 52a, a stirrer 52b (a stirring bar 52b), a heating element 52c and a thermocouple 52d are installed in the adjustment device 52. The liquid-surface control unit 52a, the stirrer 52b, the heating element 52c and the thermocouple 52d respectively correspond to the liquid-surface control unit 12a, the stirrer 12b, the heating element 12c and the thermocouple 12d in the consecutive molding device 10 and each composition is the same as the one described for the consecutive molding device 10.

A heat insulating device 53a (a heat insulating refractory 53a), lip 53b, a supporter 53c, and optionally a heating unit 53d, are installed in the devitrification prevention device 53. The heat insulating device 53a, the lip 53b, the supporter 53c and the heating unit 53d respectively correspond to the heat insulating device 13a, the lip 13b, the supporter 13c and the heating unit 13d, and each composition is the same as the one described for the consecutive molding device 10.

An upper roller 54a, a lower roller 54b and a cooling water box 54c are installed in the roll-out molding device 54. The upper roller 54a, the lower roller 54b, and the cooling water box 54c respectively correspond to the upper roller 14a, the lower roller 14b and the cooling water box 14c and each composition is the same as the one described for the consecutive molding device 10.

In the consecutive molding device 50, a conveyor 55 and a press roller 56 are installed downstream in the conveyance direction of the roll-out molding device 54. The conveyor 55 and the press roller 56 respectively correspond to the conveyor 15 and the press roller 16 and each composition is the same as the one described for the consecutive molding device 10.

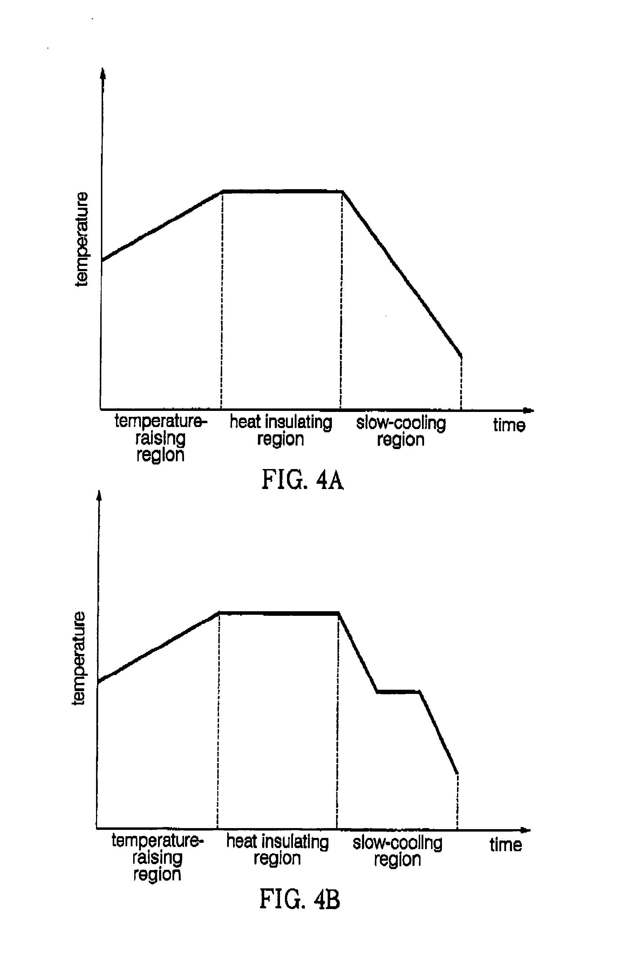

In turn from the upper stream in the conveyance direction, the crystallization device 57 is composed of: a temperature-raising region 64 to accommodate the band-shaped plate glass A and raise its temperature to a crystal-growth temperature or above in order to form a band-shaped crystallized glass plate B by forming crystal nuclei as well as growing crystals; a heat insulating region 65 to retain the temperature of the band-shaped crystallized glass plate B at the crystal-growth temperature or above; and a slow-cooling region 66 to slowly cool down the band-shaped crystallized glass plate B. The air temperature of each of the temperature-raising region 64, the heat insulating region 65 and the slow-cooling region 66 is controlled to have, for example, the temperature gradient as shown in FIG. 4A or FIG 4B. The temperature gradient shown in FIG. 4A is set such that the temperature gradient of slow-cooling is gentle. The temperature gradient shown in FIG 4B is set such that the temperature gradient of slow-cooling includes the following stages: rapid cooling, heat insulation, and rapid cooling.

The crystallization device 57 is the roller hearth kiln that is commercially available, wherein a heating unit 58, a conveyance roller 59, a thermocouple 60, and a stirrer 68 are installed.

The heating unit 58, the conveyance roller 59, the thermocouple 60 and the stirrer 68 respectively correspond to the heating unit 18, the conveyance roller 19, the thermocouple 20 and the stirrer 28 in the consecutive molding device 10 and each composition is the same as the one described for the consecutive molding device 10.

The temperature-raising region 64 is a region to accommodate the band-shaped plate glass A in the atmosphere of a crystal nucleus-formation temperature and raise the temperature to a crystal-growth temperature or above. In the region 64, for example, the temperature gradients as shown in FIG. 4A and FIG 4B are set, the temperature of the band-shaped plate glass A is supposed to be raised gradually as the plate glass A is carried towards the exit direction of the crystallization device 57. The band-shaped plate glass A, passing the temperature-raising region 64 to form crystal nuclei and grow crystals, becomes a band-shaped crystallized glass plate B.

The heat insulating region 65 is a region to retain the temperature of the band-shaped crystallized glass plate B at crystal-growth temperature or above for a certain fixed time, and in the case of temperature gradients shown in FIG 4A and FIG. 4B, it is a region to retain the glass plate B at the temperature of the most downstream portion (the exit portion) in the temperature-raising region 64. In the band-shaped crystallized glass plate B, formation of crystal nuclei and growth of crystals (especially, growth of crystals) further proceed while passing the heat insulating region 65. The degree of crystallization is thus enhanced.

The slow-cooling region 66 is a region to slowly cool down the band-shaped crystallized glass plate B in order to remove residual strain from the glass plate B as well as homogenize it. In the slow-cooling region 66, for example, the temperature gradients as shown in FIG. 4A and FIG 4B are set, and the band-shaped crystallized glass plate B is supposed to be cooled gradually as it is carried toward the exit direction of the crystallization device 57.

Glass raw materials are melted by the melting device 51 to become molten glass. The molten glass is carried to the adjustment device 52, flowing out from the adjustment device 52 and flowing into the devitrification prevention device 53. After passing the devitrifcation prevention device 53, the molten glass is supplied to the roll-out molding device 54. Then, the molten glass is roll formed into a band-shaped plate glass A by the roll-out molding device 54. The band-shaped plate glass A is carried by the conveyor 55 and introduced into the crystallization device 57. Then, the band-shaped plate glass A is crystallized to become a band-shaped crystallized glass plate B by the crystallization device 57. The band-shaped crystallized glass plate B is carried to the cutting device 67 and cut into a prescribed size by the cutting device 67 to produce a crystallized glass plate C. The crystallized glass plate C is transported to a secondary processing factory to produce finished products by secondary processing.

### [EMBODIMENTS]

The following embodiments are provided to further explain the present invention, but not to limit the scope of the present invention.

The impact strength of the crystallized glass plates obtained in the following examples and comparative example was evaluated by calculating the failure rate (%) by the following method, using the device for impact test recited in "impact tester of spring driving and its calibration" published No.817 ,by International Electrotechnical Commission.

By using the device for impact test of 0.5J, five points on the surface of the crystallized glass plate cut into the size of 30cm×30cm×4mm were given impact three times, respectively. The result was considered as passing if there was no breakage or crack. On the other hand, it was considered as failure if there was breakage or crack. The failure rate (%) was defined as the ratio of failure (the number of failures over the total sheets of glass used in the test).

The following three embodiments were conducted using a device which has the same components as the consecutive molding devices shown in FIG. 1 and FIG. 3. A comparative example was conducted using a device which has the same components as the consecutive molding device disclosed by reference 1. Temperatures in the crystallization processes of the three embodiments and the comparative example is the air temperature inside the regions of the crystallization device.

### [Embodiment 1]

A glass raw material composed of SiO₂ 63.5%, Al₂O₃ 21.5%, MgO 0.5%, ZnO 1.5%, BaO 1.8%, TiO₂ 2.8%, ZrO₂1.5%, B₂O₃ 0.3%, P₂O₅ 1.0%, Na₂O 0.7%, K₂O 0.5%, Li₂O 3.6%, As₂O₃ 0.5%, V₂O₅ 0.3% by mass present, was prepared and put in a melting device. The glass raw material was melted at 1670°C and then, roll formed into 170cm×250m×4mm by a molding device to produce a band-shaped plate glass.

The band-shaped plate glass obtained above was carried from the molding device to a crystallization device and disposed in a temperature-raising region with entrance temperature 730°C. The plate glass was carried through the region such that its temperature was raised up to 880°C at a rate of 1°C/minute, crystal nuclei were formed and crystals were grown to produce a band-shaped crystallized glass plate.

Then, the band-shaped crystallized glass plate was carried through a slow-cooling region such that it was slowly cooled down to 100°C at a rate of 10°C/minute.

Then, the band-shaped crystallized glass plate was cut into a length of 100cm in the conveyance direction by a cutting device.

Finally, a black crystallized glass plate with a β-quartz mixed crystal precipitated as a main crystal was obtained. The crystal lized glass plate did not have any wave, deformation, breakage or crack, and had a flat and beautiful appearance. The failure rate thereof was 5% or less.

### [Embodiment 2]

A glass raw material composed of SiO₂ 64.0%, Al₂O₃ 22.0%, MgO 0.5%, ZnO 1.0%, BaO 2.0%, TiO₂ 2.5%, ZrO₂ 1.5%, B₂O₃ 0.3%, P₂O₅ 0.8%, Na₂O 0.8%, K₂O 0.3%, Li₂O 3.8%, As₂O₃ 0.5% by mass present, was prepared and put in a melting device. The gl ass raw material was melted at 1650°C and then, roll formed into 170cm×250m×4mm by a molding device to produce a band-shaped plate glass.

The band-shaped plate glass obtained above was carried from the molding device to a crystallization device and disposed in a temperature-raising region with entrance temperature 750°C. The plate glass was carried through the region such that its temperature was raised up to 1000°C at a rate of 2°C/minute, crystal nuclei were formed and crystals were grown to produce a band-shaped crystallized glass plate.

Then, the band-shaped crystallized glass plate was carried through a slow-cooling region such that it was slowly cooled down to 100°C at a rate of 5°C/minute.

Then, the band-shaped crystallized glass plate was cut into a length of 100cm in the conveyance direction by a cutting device.

Finally, a white crystallized glass plate with β-spodumene precipitated as a main crystal was obtained. The crystall ized glass plate did not have any wave, deformation, breakage or crack, and had a flat and beautiful appearance. The fail ure rate thereof was 5% or less.

### [Embodiment 3]

A glass raw material composed of SiO₂ 63.5%, Al₂O₃ 21.5%, MgO 0.5%, ZnO 1.5%, BaO 1.8%, TiO₂ 2.8%, ZrO₂ 1.5%, B₂O₃ 0.3%, P₂O₅ 1.0%, Na₂O 0.7%, K₂O 0.5%, Li₂O 3.6%, As₂O₃ 0.5%, V₂O₅ 0.3% by mass present, was prepared and put in a melting device. The glass raw material was melted at 1670°C and then, roll formed into 170cm×250m×4mm by a molding device to produce a band-shaped plate glass.

The band-shaped plate glass obtained above was carried from the molding device to a crystallization device and disposed in a temperature-raising region with entrance temperature 730°C. The plate glass was carried through the region such that its temperature was raised up to 880°C at a rate of 1.5°C/minute, crystal nuclei were formed and crystals were grown to produce a band-shaped crystallized glass plate.

Then, the band-shaped crystallized glass plate was introduced into a heat insulating region of 880°C and retained at 880°C for 30 minutes such that the glass plate was further crystallized.

Then, the band-shaped crystallized glass plate was carried through a slow-cooling region so as to be slowly cooled down to 100°C at a rate of 10°C/minute.

Then, the band-shaped crystallized glass plate was cut into a length of 100cm in the conveyance direction by a cutting device.

Finally, a black crystallized glass plate with a β-quartz mixed crystal precipitated as a main crystal was obtained. The crystal lized glass plate did not have any wave, deformation, breakage or crack, and had a flat and beautiful appearance. The failure rate thereof was 5% or less.

Embodiment 3, provided with a heat insulating process, could shorten the total time for the crystallization, compared to Embodiment 1, not provided with a heat insulating process. The failure rate of Embodiment 3 was almost the same as that of Embodiment 1.

### [Comparative Example 1]

A glass raw material composed of SiO₂ 63.5%, Al₂O₃ 21.5%, MgO 0.5%, ZnO 1.5%, BaO 1.8%, TiO₂ 2.8%, ZrO₂ 1.5%, B₂O; 0.3%, P₂O₅ 1.0%, Na₂O 0.7%, K₂O 0.5%, Li₂O 3.6%, As₂O₃ 0.5%, V₂O₅ 0.3% by mass present, was prepared and put in a melting device. The glass raw material was melted at 1670°C and then, roll formed into 170cm×250m×4mm by a molding device to produce a band-shaped plate glass.

The band-shaped plate glass obtained above was carried from the molding device to a crystallization device and put in a heat insulating region with temperature 630°C. The band-shaped plate glass was conveyed inside the region with its temperature retained at 630°C, around the glass transition temperature, for 10 minutes.

Then, the band-shaped plate glass was carried through a first temperature-raising region such that its temperature was raised up to 730°C at a rate of 10°C/min.

Then, the band-shaped plate glass was disposed in a heat insulating region of 730°C. The ba nd-shaped plate glass was conveyed inside the region with its temperature retained at 730°C for 20 minutes, such that crystal nuclei were formed in the band-shaped plate glass.

Then, the band-shaped plate glass with crystal nuclei formed therein was carried through a second temperature-raising region such that its temperature was raised up to 880°C at a rate of 1°C/min.

Then, the band-shaped plate glass with crystal nuclei formed therein was introduced into a heat insulating region with temperature 880°C. The band-shaped plate glass was conveyed inside the region with its temperature retained at 880°C for 30 minutes, such that crystals were grown therein to produce a band-shaped crystallized glass plate.

Then, the band-shaped crystallized glass plate was carried through a slow-cooling region such that it was slowly cooled down at a rate of 10°C/minute until 100°C.

Then, the band-shaped crystallized glass plate was cut into a length of 100cm in the conveyance direction by a cutting device.

Finally, a black crystallized glass plate with a β-quartz mixed crystal precipitated as a main crystal was obtained. The crystallized glass plate did not have any wave, deformation, breakage or crack, and had a flat and beautiful appearance. The failure rate thereof was 5% or below.

## Claims

1. A consecutive molding method for crystallized glass, comprising:
a melting process to obtain molten glass by melting glass raw materials;
a molding process to obtain a band-shaped plate glass by roll forming the molten glass to become band-shaped;
a crystallization process to obtain a band-shaped crystallized glass plate by conducting thermal treatment on the band-shaped plate glass to crystallize it; and
a cutting process to cut the band-shaped crystallized glass plate,
wherein the crystallization process includes:
a temperature-raising process to produce the band-shaped crystallized glass plate by disposing the band-shaped plate glass obtained in the molding process, in the atmosphere of a crystal nucleus-formation temperature and raising the temperature to a crystal-growth temperature or above to grow crystals as well as form crystal nuclei; and
a slow-cooling process to slowly cool down the band-shaped crystallized glass plate.

2. The consecutive molding method for crystallized glass of Claim 1, wherein the crystallization process further includes a heat insulating process to retain the temperature of the band-shaped crystallized glass plate at the crystal-growth temperature or above, between the temperature-raising process and the slow-cooling process.

3. The consecutive molding method for crystallized glass of Claim 1 or 2, further comprising, between the melting process and the molding process:
an adjustment process to adjust the homogeneity, viscosity and liquid surface of the molten glass obtained in the melting process; and
a devitrification prevention process to prevent devitrification of the molten glass that has undergone the adjustment process.

4. A consecutive molding device for crystallized glass, comprising:
a melting device to obtain molten glass by melting glass raw materials;
a molding device to obtain a band-shaped plate glass by roll forming the molten glass to become band-shaped;
a crystallization device to obtain a band-shaped crystallized glass plate by conducting thermal treatment on the band-shaped plate glass to crystallize it; and
a cutting device to cut the band-shaped crystallized glass plate,
wherein the crystallization device includes:
a temperature-raising region to produce the band-shaped crystallized glass plate by accommodating the band-shaped plate glass obtained by the molding device in the atmosphere of a crystal nucleus-formation temperature and raising the temperature to a crystal-growth temperature or above in order to grow crystals as well as form crystal nuclei; and
a slow-cooling region to slowly cool down the band-shaped crystallized glass plate.

5. The consecutive molding device for crystallized glass of Claim 4, wherein the crystallization device further includes:
a heat insulating region to retain the temperature of the band-shaped crystallized glass plate at the crystal-growth temperature or above between the temperature-raising region and the slow-cooling region.

6. The consecutive molding device for crystallized glass of Claim 4 or 5, further comprising, between the melting device and the molding device:
an adjustment device to adjust the homogeneity, viscosity and liquid surface of the molten glass obtained by the melting device; and
a devitrification prevention device to prevent devitrification of the molten glass flowing out from the adjustment device.
